# EUROPEAN PATENT APPLICATION

(11) **EP 2 536 116 A1**
(43) Date of publication of application: **19.12.2012**
(21) Application number: 12164483.5
(22) Date of filing: 17.04.2012
(51) Int. Cl.: H04M 3/56, H04L 12/18

(54) **METHOD AND SYSTEM FOR CREATING CONFERENCE CALLS FROM MESSAGES**

(30) Priority: 17.06.2011 US 201161498407 P
(71) Applicant: Research in Motion Limited, Waterloo, ON N2L 3W8 (CA)
(72) Inventor: Lucey, Christina Evelyn, San Francisco, CA California 94123 (US); Bergmann, Carsten Michael, Redwood City, CA California 94065 (US); Baccay, Peter Eymard, Redwood City, CA California 94065 (US); Reyes, Eric Marbibi, Menlo Park, CA California 94025 (US)
(74) Representative: Moore, Barry

(57) **Abstract**

Presented are systems and methods of creating conference calls from messages these can be emails or instant messages (300). The selected message is used to extract participants for the setting up of a conference call, this is done by reading the recipients and sender of e.g. the email. A conference call schedule system is then activated (305) and generates a conference call invitation based on the information extracted from the message e.g. email. Conference call dialing details are automatically acquired (315) for the conference call invitation from a memory that stores user data such as name, number, address as well as conference dial in numbers and passcodes. The conference call invitation is automatically populated (320), based on the activation, with the conference call details and the conference call dialing details. The conference call invitation is then sent to the invitees (340).

## Description

### RELATED APPLICATION

This is a non-provisional application which claims the benefit of U.S. Provisional Application No. 61/498,407, filed June 17, 2011, which is incorporated herein by reference.

### FIELD

Example embodiments relate to conference call systems and methods, and in particular to a method for scheduling a conference call using a mobile device based on a received message.

### BACKGROUND

There are currently many methods for users of various devices to send messages to each other. Email messages and instant messages are two common ways that messages are distributed to a group of users. Such messages can have multiple addressees and on occasion one recipient of the message can desire to schedule a conference call with the other message recipients.

Currently, a message recipient who desires to schedule a conference call based on a received message must separately execute a scheduling program, generate a conference call calendar invitation, and then manually populate the fields with the conference call details (such as the subject) from information provided in the received message. The message recipient will also have to manually add invitees. In some instances, the message recipient will have to add numerous invitees, all of which must be individually added to the conference call invitation for the conference call.

### BRIEF DESCRIPTION OF THE DRAWINGS

**Figure 1** shows, in block diagram form, an example system utilizing a conference call scheduling system;

**Figure 2** is a block diagram depicting example conference call scheduling system for managing conference call invitations generated from a message;

**Figure 3** shows, is a flowchart representing an example method for generating a conference call invitation for a conference call on an organizing device based on a received message;

**Figure 4A** illustrates an example message;

**Figure 4B** illustrates an example message with an active software menu displayed;

**Figure 4C** illustrates an example populated conference call invitation; and

**Figure 5** shows another flowchart representing an example method for accepting and joining a conference call.

### DESCRIPTION OF EXAMPLE EMBODIMENTS

The example embodiments provided below describe a conference call scheduling system and method where a menu feature allows a user (organizer) to create a conference call by converting a message received on a device (organizer device) into a conference call invitation. Selecting the menu feature automatically populates the fields of the conference call invitation with conference call details (for example, addressee identifiers, subject information, body information, attachments, *etc.*) from the received message. The menu feature populates an invitee field with the one or more message addressee identifiers, a subject line field of the conference call invitation with the subject line of the message, or notes field of the conference call invitation with some information from the body of the message or any combination above. Moreover, the menu feature provides the ability to automatically add dialing details retrieved from a data storage location and incorporate the dialing details in the conference call invitation. After creating the conference call invitation, the user sends the invitation to the designated invitees.

The recipients of the conference call invite is prompted whether to accept or decline the conference. After receiving input from the invitee, the recipient device (invitee device) notifies the organizer device whether the invitee has accepted or declined the conference invitation. In some example embodiments, if the conference call invitation is accepted, the invitee device acquires updated dialing details from the organizer device.

In some example embodiments, the organizer device provides preferred conference dial-in information (dialing details) based on known information regarding the invitee locations. Additionally, in some example embodiments, the organizer device automatically updates the preferred dialing details based on information received from invitee devices.

An application operating on a device allows a user to create a conference call by converting a message received on the device into a appointment. It will be appreciated that the received message can be, for example, an email, an instant message, a group discussion, an update thread on Lotus^{™} connections, a group message on Facebook^{™}, or people mentioned in a post on Twitter^{™}.

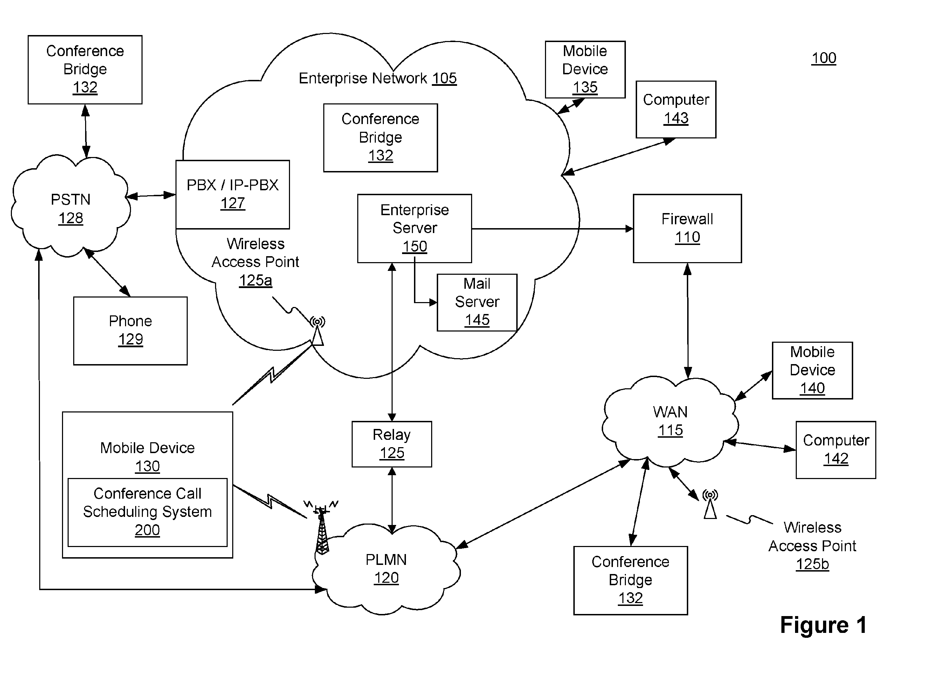

Reference is now made to **Figure 1**, which shows, in block diagram form, an example system utilizing a conference call scheduling system for scheduling conference calls. The system 100 includes an enterprise or business system 105, which in some embodiments includes a local area network (LAN). In the description below, the enterprise or business system 105 can be referred to as an enterprise network 105. In some embodiments, the enterprise network 105 includes more than one network and be located in multiple geographic areas.

As shown in **Figure 1**, enterprise network 105 is connected through a firewall 110, to a wide area network (WAN) 115, such as the Internet. In some embodiments, enterprise network 105 is connected to WAN 115 without the use of firewall 110.

Enterprise network 105 also communicates with a public land mobile network (PLMN) 120, which, in some embodiments, is referred to as a wireless wide area network (WWAN) or a cellular network. The connection with PLMN 120 can be made via a relay 125.

In some embodiments, enterprise network 105 provides a wireless local area network (WLAN) featuring wireless access points, such as wireless access point 125a. In some embodiments, other WLANs can exist outside enterprise network 105. For example, a WLAN connected to WAN 115 can be accessed via wireless access point 125b. WAN 115 can be coupled to one or more mobile devices, for example mobile device 140. Additionally, WAN 115 can be connected to one or more desktop or laptop computers 142 (one shown).

The system 100 includes a number of enterprise-associated mobile devices, for example, mobile devices 130, 135, and 140. Mobile devices can be, for example, cellular phones, smartphones, tablets, netbooks, and gaming consoles. Moreover, mobile devices 130, 135, and 140 can provide three principal modes of communication: a data communication mode, a voice communication mode, and a video communication mode. In the data communication mode, for example, a downloaded Web page can be further processed by a browser application, or an e-mail message can be processed by an e-mail message messaging application and output to a display. A user of, mobile devices 130, 135, and 140 can also compose data items, such as e-mail messages, for example, using the input devices in conjunction with the display. These composed items can be transmitted over the wireless network (for example WAN 115 and/or PLMN 120). In the voice communication mode, mobile devices 130, 135, and 140 provide telephony functions and operate as a typical cellular phone. In the video communication mode, mobile devices 130, 135, and 140 provide video telephony functions and operate as a video teleconference term. In the video communication mode, mobile devices 130, 135, and 140 utilize one or more cameras (not shown) to capture video of video teleconference. Additionally, in some embodiments, mobile devices 130, 135, and 140 utilize their associated one or more cameras to capture video. The video can be stored as one or more video data files in memory, or any other data storage medium. Additionally, the mobile devices 130, 135, and 140 include devices equipped for cellular communication through the PLMN 120, mobile devices equipped for Wi-Fi communications via wireless access points 125a or 125b, or dual-mode devices capable of both cellular and WLAN communications. Mobile devices 130, 135, and 140 can include one or more processors (not shown), a memory (not shown), and a data interface (not shown). The processor(s) can be a single or multiple microprocessors, field programmable gate arrays (FPGAs), or digital signal processors (DSPs) capable of executing particular sets of instructions. Computer-readable instructions can be stored on a tangible non-transitory computer-readable medium, such as a flexible disk, a hard disk, a CD-ROM (compact disk-read only memory), and MO (magneto-optical), a DVD-ROM (digital versatile disk-read only memory), a DVD RAM (digital versatile disk-random access memory), or a semiconductor memory.

In some embodiments, the memory stores user-profile information, including, one or more conference dial-in telephone numbers. Additionally, the memory can store information relating to various people, for example, name of a user, a user's identifier (user name, email address, or any other identifier), place of employment, work phone number, home address, *etc.*

In some embodiments mobile devices 130, 135, and 145 include one or more radio transceivers and associated processing hardware and software to enable wireless communications with the PLMN 120 and/or one of the wireless access points 125a or 125b. In various embodiments, PLMN 120 and mobile devices 130, 135, and 145 are configured to operate in compliance with one or more of a number of wireless protocols, including GSM, GPRS, CDMA, EDGE, UMTS, EvDO, HSPA, 3GPP, or a variety of others. It will be appreciated that mobile devices 130, 135, and 140 can roam within PLMN 120 and across PLMNs, in known manner, as the user moves. In some embodiments, mobile devices 130, 135, and 140 operate as dual mode devices, or enterprise network 105 is configured to facilitate roaming between PLMN 120 and a WLAN 125, or both. Thus, the system is capable of seamlessly transferring sessions (such as voice calls) from a connection with the cellular interface of dual-mode device 130, 135, and 140 to the WLAN 115 interface of the mode device 130, 135, and 140, and vice versa.

Enterprise network 105 typically includes a number of networked servers, computers, and other devices. For example, in some embodiments enterprise network 105 couples one or more computers 143 (one shown). The coupling can be wired or wireless in some embodiments.

Computers 142 and 143 can include one or more processors (not shown), a memory (not shown), and a data interface (not shown). The processor(s) can be a single or multiple microprocessors, field programmable gate arrays (FPGAs), or digital signal processors (DSPs) capable of executing particular sets of instructions. Computer-readable instructions can be stored on a tangible non-transitory computer-readable medium, such as a flexible disk, a hard disk, a CD-ROM (compact disk-read only memory), and MO (magneto-optical), a DVD-ROM (digital versatile disk-read only memory), a DVD RAM (digital versatile disk-random access memory), or a semiconductor memory.

In some embodiments, enterprise network 105 includes one or more mail servers, such as mail server 145, for coordinating the transmission, storage, and receipt of electronic messages, including conference call invitations, for client devices operating within enterprise network 105. Typical mail servers include the Microsoft Exchange Server^{™} and the IBM Lotus Domino^{™} server. Each user within the enterprise typically has at least one user account within the enterprise network 105. Associated with each user account is message address information, such as an e-mail address, user name, *etc.* Messages addressed to a user message address are stored on the enterprise network 105 in mail server 145. The messages can be retrieved by the user using a messaging application, such as an email client application. In some embodiments, the messaging application operates on mobile devices 130 and 135 coupled to enterprise network 105 within the enterprise. Using the messaging application, the user composes and sends messages addressed to others, within or outside enterprise network 105. The messaging application causes mail server 145 to send a composed message to the addressee, often via WAN 115.

The relay 125 serves to route messages received over PLMN 120, for example, from mobile device 130 to the corresponding enterprise network 105. In some embodiments, the relay 125 pushes messages from enterprise network 105 to mobile device 130 via PLMN 120.

Enterprise network 105 also includes an enterprise server 150. Together with relay 125, enterprise server 150 functions to redirect or relay incoming e-mail messages addressed to a user's e-mail address within enterprise network 105 to the user's mobile device 130 and to relay incoming e-mail messages composed and sent via mobile device 130 out to the intended recipients within WAN 115 or elsewhere. Enterprise server 150 and relay 125 together facilitate "push" e-mail service for mobile device 130 enabling the user to send and receive e-mail messages using the mobile device 130 as though the user were coupled to an e-mail client within enterprise network 105 using the user's enterprise-related e-mail address, for example on computer 15.

As is typical in many enterprises, the enterprise network 105 also includes a Private Branch eXchange ("PBX"; although in various embodiments the PBX can be a standard PBX or an IP-PBX, for simplicity, the description below uses the term PBX to refer to both) 127 having a coupling with a public switched telephone network ("PSTN") 128 for routing incoming and outgoing voice calls for the enterprise. PBX 127 is coupled to PSTN 128 via direct inward dial ("DID") trunks or primary rate interface ("PRI") trunks, for example. PBX 127 can use integrated service digital network ("ISDN") signaling protocols for setting up and tearing down circuit-switched couplings through PSTN 128 and related signaling and communications. In some embodiments, PBX 16 can be coupled to one or more conventional telephones 129. PBX 127 is also coupled to enterprise network 105 and, through it, to mobile devices 130 and 135, and softphones operating on computer 142, etc. Within the enterprise, each individual can have an associated extension number, sometimes referred to as a private number plan (PNP), or direct dial phone number. Calls outgoing from PBX 127 to PSTN 128 or incoming from PSTN 128 to PBX 127 are typically circuit-switched calls. Within the enterprise, for example, between PBX 127 and terminal devices, voice calls are often packet-switched calls, for example Voice-over-IP (VoIP) calls.

System 100 includes one or more conference bridges 132. Conference bridge 132 can be part of enterprise network 105. Additionally, in some embodiments, conference bridge 132 can be accessed via WAN 115 or PTSN 128.

Mobile device 130 has a conference call scheduling system 200 and is in communication with enterprise network 105. In some example embodiments, system 200 also operates on mobile devices 135 and 140, or computers 142 and 143, or both. In some embodiments, conference call scheduling system 200 is in communication with and operates as part of a larger scheduling program installed on mobile devices 130, 135, and 140, and other servers on the enterprise network 105, for example, mail server 145. Additionally, in some embodiments, the conference call scheduling system 200 is integral to the scheduling program.

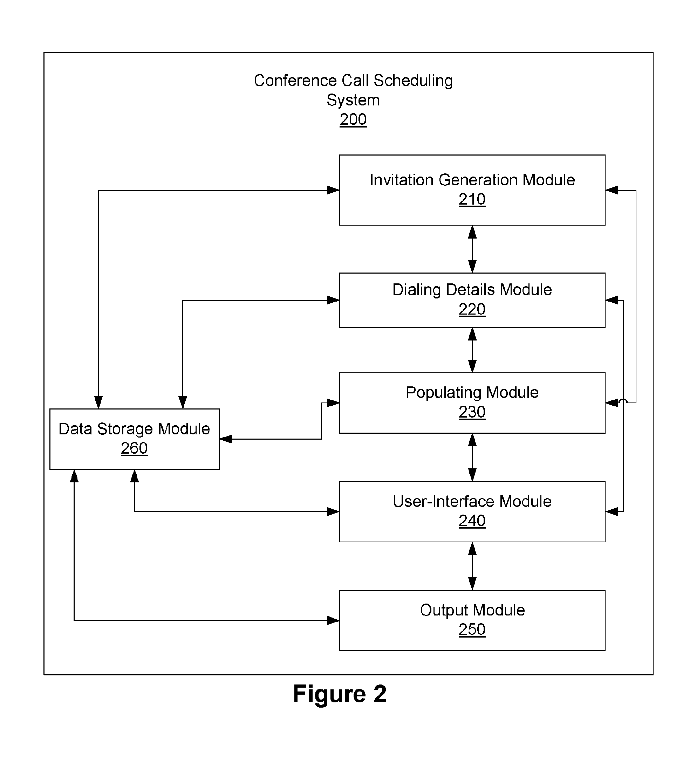

Reference is now made to Figures 2 to 4, which illustrate example embodiments of the conference call scheduling system.

**Figure 2** is a block diagram depicting example conference call scheduling system 200. As illustrated, conference call scheduling system 200 includes an invitation generation module 210, a dialing details module 220, a populating module 230, a user-interface module 240, an output module 250, and a data storage module 260. It is appreciated that one or more of these modules can be deleted, modified, or combined together with other modules.

In some example embodiments, invitation generation module 210 is configured to generate, on a mobile device (for example, mobile device 130), a conference call invitation containing one or more fields based on a received input from a mobile device user and a received message. By way of illustration, mobile device 130 is being used as an example of the organizing device. It should be appreciated that mobile devices 135 and 140, and computer 142 can also act as the organizing device.

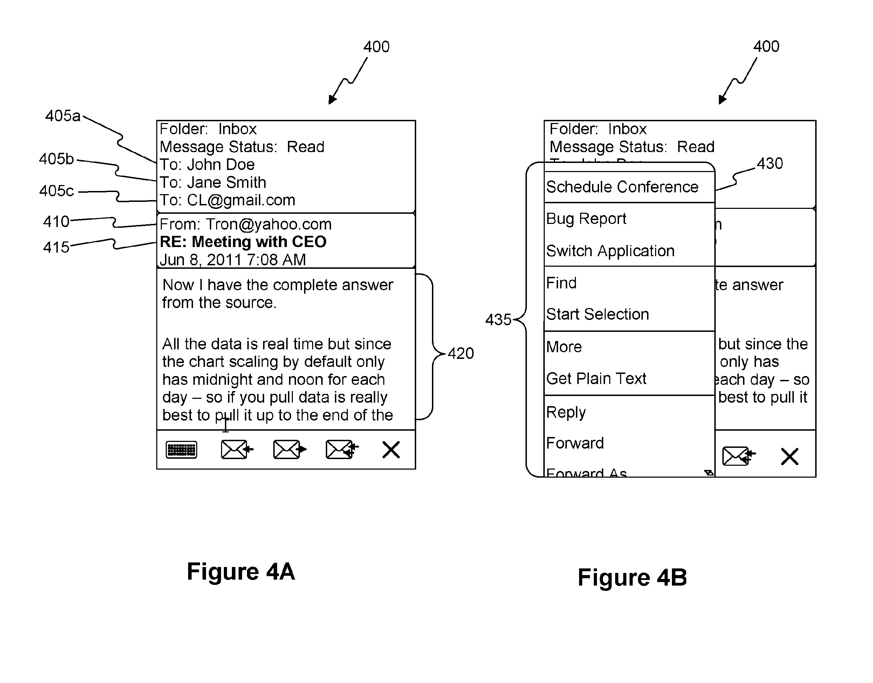

**Figure 4A** illustrates an example received message 400. Message 400 can be, for example, an email, an instant message, a group discussion, an update thread on Lotus^{™} connections, a group message on Facebook^{™}, or people mentioned in a post on Twitter^{™}.

Message 400 has addressee identifiers 405a, 405b, and 405c. Addressee identifiers 405a and 405b are user names, and addressee identifier 405c is an email address. In this example, addressee identifier 405b corresponds to the organizer, Jane Smith. In some embodiments, the addressee identifiers can also be phone numbers. Note that message 400 also has an originator identifier 410. In this example, message originator is a user name, however, in other embodiments it can be a phone number or email address. Message 400 includes subject information 415 and a body 420. Additionally, the message can have one or more attachments (not shown).

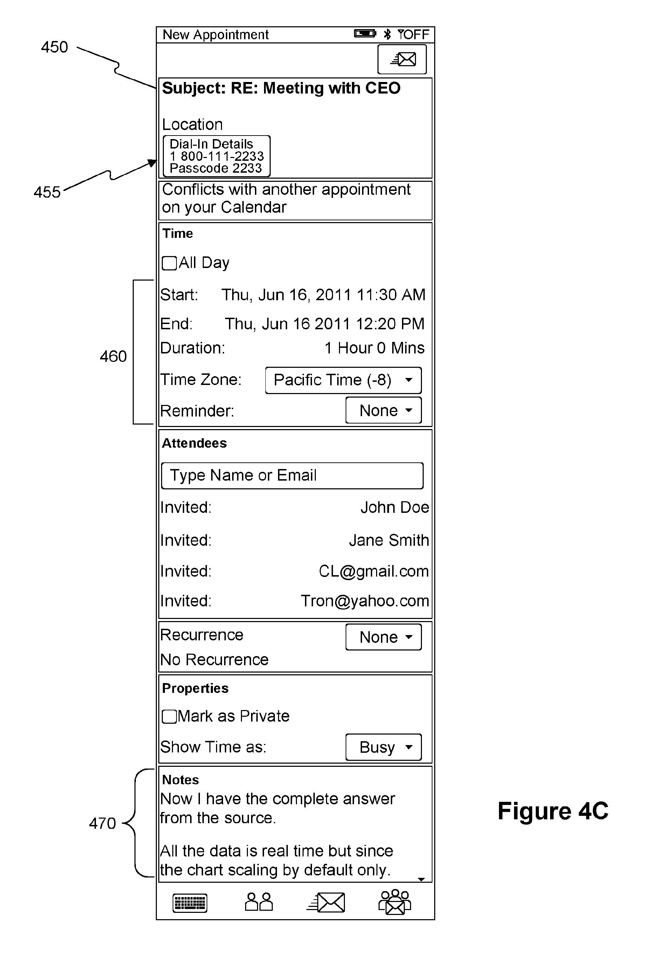

Invitation generation module 210 can be separate from an existing scheduling program operating on a mobile device, such that it can be executed without first executing the scheduling program installed on the mobile device 130. In some example embodiments, invitation generation module 210 operates as a part of the scheduling program operating on the mobile device. A user can configure the invitation generation module 210 to be executed when the mobile device receives a message. In some embodiments, the message is opened and actively displayed on device 130. See for example, **Figure 4****B.** Invitation generation module 210 is executed by a software menu command 430, which is part of menu 435. In some embodiments, menu 435 can be accessed via an actual button on the mobile device. Menu 435 can contain a plurality of commands. Referring back to **Figure 2****,** a user using invitation generation module 210 can also select a particular message that has not been opened. The message can then be stored in data storage module 260, and a pointer generated, which indicates the message storage location. Invitation generation module 210 can then transfer the conference call invitation shell to dialing details module 220 along with the pointer to the message. Additionally, in some example embodiments, the invitation generation module 210 then transfers the message storage location to population module 230 along with the conference call invitation shell. Invitation generation module 210 can communicate with the dialing details module 220 and data storage module 260.

Dialing details module 220 is configured to automatically acquire conference dialing details for the conference call invitation based on the addressees of the message. Dialing details module 220 can access the message stored in data storage module 260. Additionally, in some example embodiments, dialing details module 220 acquires one or more potential conference dial-in phone numbers (dialing details) from data storage module 230. Dialing details module 220 can be configured to acquire preferred dialing details based on information known about the message addressees, such as the message addressees' geographic locations. A message addressee's geographic location can be determined based on, for example, the address associated with the message addressee in a contact list stored in data storage module 230, or from GPS data made available from a location based service on the message addressee's device. Accordingly, in the presently described example, if the addressees are within the same city, dialing details module 220 can analyze geographic information about the invitees to determine their location and provide a local number as the conference call dial-in number. In contrast, if the addressees are located in different states, dialing details module 220 would provide a toll free number as the conference call dial-in number.

Additionally, in some example embodiments, dialing details module 220 is configured to receive updates from invitee (message addressees who receive the conference call invitation) mobile devices that can be used to update conference dial-in information. For example, if mobile device 135 declines the conference call invitation, or after having previously accepted the conference call invitation later decides to cancel, mobile device 135 can notify the organizing mobile device 130 that mobile device 135 will not participate at the scheduled conference call. Dialing details module 220 can communicate with invitation generation module 210, populating module 230, user-interface module 240, and data storage module 260.

In the presently described example embodiment, populating module 230 is configured to automatically populate the conference call invitation with information from the message and dialing details provided by dialing details module 220. Populating module 230 acquires the message from a message storage location, such as data storage module 260. Populating module 230 then analyzes the message and extracts conference call details to populate the one or more fields of the conference call invitation. Conference call details can include one or more addressee identifiers, subject information, body information, attachments, date and time of conference, and dialing details. Populating module 230 can extract the addressee identifier of all the message addressees and populate the invitee field of the conference call invitation with those addressee identifiers. Additionally, populating module 230 can be configured to only populate the invitee field of the conference call invitation with some of the message addressee identifiers, for example, if the message is an email, only populating the invitee field with email addresses that were in the "TO:" address field of the email. In some example embodiments, populating module 230 populates the "TO:" address field with other types of addressee identifiers, such as usernames (for example, Facebook^{™}, Twitter^{™}, instant messaging), a number (for example, a phone number for text messaging), any other address or identifier for the invitee, or any combination above. Additionally, populating module 230 can extract the subject information of the message and populate the subject field of the conference call invitation with the subject information. In some example embodiments, the message does not have a traditional subject line, such as, an instant message. In this case, populating module 230 is configured to use the information from the body of the message, namely, first sentence, last sentence, *etc.* In some other example embodiments, populating module 230 extracts information from the body of the message and populates the notes section of the conference call invitation with the extracted information. In alternate example embodiments, populating module 230 also acquires dialing details from the dialing details module 220, and then populates at least one of the fields within the conference call invitation with the acquired dialing details.

If the message has one or more attachments, population module 220 can populate the conference call invitation with one or more of the attachments. Additionally, in some embodiments population module 220 can automatically attach the message to the conference call invitation. Population module 220 can communicate with invitation generation module 210, dialing details module 220, user-interface module 240, and data storage module 260.

User-interface module 240 displays the populated conference call invitation on a display of the organizer device. User-interface module 240 enables modification of any of the fields of the conference call invitation. For example, user-interface module 240 enables the user to select different dialing details. User-interface module 240 enables the user to designate invitees, by for example, adding invitees or subtracting invitees from the conference call invitation. In some example embodiments, once the user has finalized the addressee list, user-interface module 240 communicates with dialing details module 220 to acquire any updates to the dial-in information. Also, in some example embodiments, user interface module 240 enables updating of the conference call dialing details, by for example, displaying a selectable feature such as an icon that the user can select to update the conference call dialing details. In other example embodiments, dialing details module 220 can automatically update the conference dial-in information without user input.

**Figure 4C** illustrates an example user interface module 240 displaying the populated conference call invitation. Subject field 450 is populated with subject information 415 of the message. Invite fields 462, 463, 464, and 465 are populated with the addressee identifiers 405a, 405b, 405c, and the originator identifier 410. And a note section 470 is populated with information from the body 420 of received message 400.

Referring back to **Figure 2**, user-interface module 240 is configured to prompt the user at a predetermined time to join the conference. User-interface module 240 can be configured to prompt the user to send updated dialing information to the invitees. User-interface module 240 can communicate with dialing details module 220, populating module 230, output module 250, and data storage module 260.

Output module 250 is configured to transmit the conference call invitation, via enterprise network 105, PLMN 120, WAN 115, or some combination thereof. In some embodiments, output module 250 can store the conference call invitation in data storage module 260. Output module 250 can be coupled to user-interface module 240 and data storage module 260.

Data storage module 260 can also include a database, one or more computer files in a directory structure, or any other appropriate data storage mechanism such as a memory. Additionally, in some embodiments, data storage module 260 stores user profile information, including, one or more conference dial in telephone numbers. Data storage module 260 also stores information relating to various people, for example, name, place of employment, work phone number, home address, *etc.* In some example embodiments, data storage module 260 is distributed across a one or more network servers, for example, mail server 145. Data storage module 260 can communicate with invitation generation module 210, dialing details module 220, populating module 230, user-interface module 240, and output module 250.

Each of modules 210, 220, 230, 240, 250, and 260 can be software programs stored in a RAM, a ROM, a PROM, a FPROM, or other dynamic storage device for storing information and instructions.

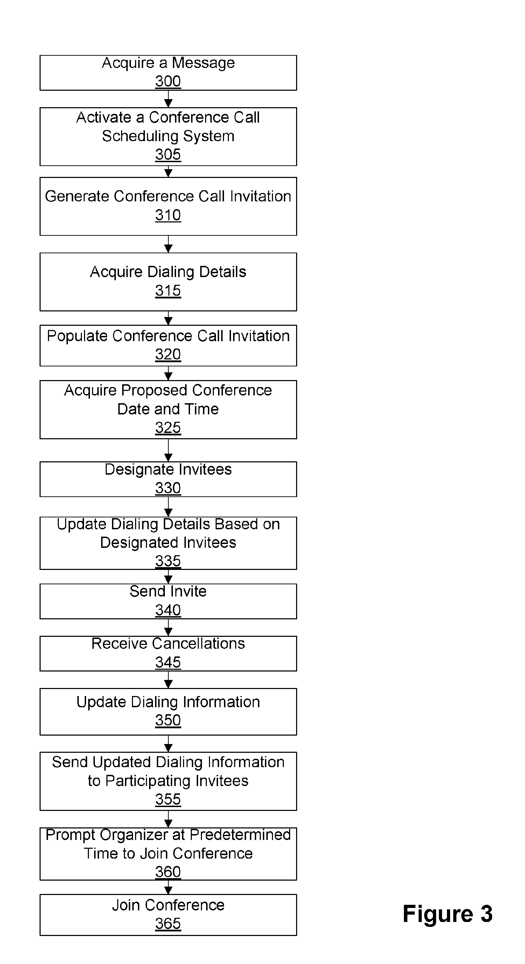

**Figure 3** is a flowchart representing an example method for generating a conference call invitation based on a received message. While the flowchart discloses the following steps in a particular order, it is appreciated that at least some of the steps can be moved, modified, or deleted where appropriate. In step 300, a device acquires a message. The message has one or more addressees or identifiers (for example, an email addresses or a username), a subj ect line, and a body containing text. Additionally, in some example embodiments, the message has one or more file attachments. In some example embodiments, the message is an email or an instant message, or other means of communication such as a group discussion, a thread on Lotus^{™} connections, a group message on Facebook^{™}, or people mentioned in a post on Twitter^{™}.

In step 305, an organizer activates the conference call scheduling system. In some embodiments the organizer presses a menu key to bring up a command menu. The conference call scheduling system executable command can be accessed through this command menu.

In step 310, the conference call scheduling system generates a conference call invitation containing one or more fields. The conference call invitation includes a plurality of fields, namely, list of invitees, subject, notes, location, dialing information, attachments, *etc.* This conference call invitation can be a calendar invitation having one or more fields for a start and end time, duration, time zone, and reminder, such as the fields disclosed in section 460 of Figure 4C.

In step 315, the conference call scheduling system acquires the dialing details of the conference from a data storage module. In some embodiments, the dialing details include a phone number to access the teleconference ("access number"). In some embodiments, the dialing details includes a passcode necessary to access the teleconference. In some embodiments, step 315 is performed by a dialing details module.

In some embodiments the database can include the organizer's user profile. The user profile can include one or more different teleconference access numbers and their associated passcodes.

In step 320, the conference call scheduling system automatically populates one or more fields within the conference call invitation generated in step 312 with conference call details. Conference call details can include one or more addressee identifiers, subject information, body information, attachments, date and time of conference, and dialing details. The conference call scheduling system automatically populates the conference call invitee field(s) with one or more of the message addressees' identifiers. In some example embodiments, the conference call scheduling system populates the invitee field(s) with addressee identifiers, such as email addresses, user names, or some other identifier. These addressee identifiers can be stored in a data storage module. Additionally, in some example embodiments, the conference call scheduling system populates the conference call invitee field(s) with any addressee identifier contained in the body or subject of the received message.

The conference call scheduling system automatically populates the conference call invitation's subject line with the subject information contained in the subject line of the message. Some messages do not have a subject line. In these cases, the conference call scheduling system leaves this field blank or populates it with a predetermined statement, for example, "Conference Call Invitation." Additionally, in some example embodiments, the conference call scheduling system automatically populates the subj ect line of the conference call initiation with text contained in the body of the message, for example, last sentence in body of message.

In some example embodiments, the conference call scheduling system automatically populates the conference call invitation's notes section with information. When messages do not have content in the message body or do not have a message body the conference call scheduling system can leave the notes field blank or populate it with a predetermined statement. Additionally, in some embodiments, the conference call scheduling system automatically populates the notes section with the telephone dialing details necessary to join the conference call. In some embodiments, the conference call scheduling system automatically populates the conference call invitation with any message attachments. Additionally, it can attach the message itself to the conference call invitation.

In some embodiments, the conference call scheduling system automatically populates the conference call invitation with dialing details based on the known locations of the organizer and the invitees. For example, if the invitees are both within the same city a local number can be used versus the invitees being located in different states where a toll free conference dial-in number can be used. Additionally, the conference call scheduling system can populate the dialing details into one or more of the fields of the conference call invitation. For example, the dialing details can be placed in the dialing details field, subject field, the body of the invitation, the location field, *etc.* In some example embodiments step 320 can be performed by a populating module.

In step 325, the conference call scheduling system acquires a proposed date and time for the conference. This time can be entered manually by the organizer. Additionally, in some embodiments, the conference call scheduling system determines the proposed date and time from the received message and automatically populates the invitation with this information.

In step 330, the organizer designates the invitees. The conference call scheduling system allows the organizer to add or subtract invitees to the list. For example, in this embodiment, the conference call scheduling system has automatically populated the invitee list with all of the message addressees' identifiers, such as email addresses, user names, or some other identities. In step 330 the conference call scheduling system allows the organizer to add additional invitees or remove those from the conference call invitation.

In step 335, the conference call scheduling system can update the dialing details based on the designated invitees. For example, prior to designation (step 330) there are invitees A (San Francisco), B(San Francisco), C(San Francisco), and D(New York), with dialing details specifying a toll free access number. If the organizer modifies the invitee list during designation (step 330) such that only A, B, and C are listed in the conference call invitation, the conference call scheduling system updates the dialing details with a new access number, for example, local office number of the organizer. In some embodiments the conference call scheduling system notifies the organizer of the suggested update and request confirmation.

In step 340, the conference call scheduling system sends the conference call invitation to the invitees. In some embodiments step 340 is performed by an output module. In a step 345, the organizer device can potentially receive one or more decline-to-attend messages.

Depending upon the location of the remaining invitees, the conference call scheduling system then updates the dialing details (step 350). In some embodiments the dialing details are automatically updated. In other embodiments, the conference call scheduling system prompts the organizer to determine whether or not to update the dialing details. If the dialing details are updated, the conference call scheduling system then sends out the updated dialing details to the remaining invitees (step 355). Additionally, in some embodiments, step 350 and 355 are not performed and the invitee device moves directly from step 345 to step 360.

In step 360, the conference call scheduling system on the device prompts the organizer at a predetermined time to join the conference. The predetermined time is selected such that the organizer is the first to join the conference. In some embodiments, the organizer is able to modify the predetermined time.

In a step 365, the organizer's device joins the conference. The conference call scheduling system automatically schedules the conference call invitation such that the organizer is the first to join the meeting. This is because the organizer's dialing details differ from the invitees in that they further include the moderator passcode used to establish the teleconference and establish the organizer as the moderator of the conference. In some embodiments, the dial-in to the conference is conducted automatically by the organizer's device. In other embodiments, the organizer manually dials into the teleconference.

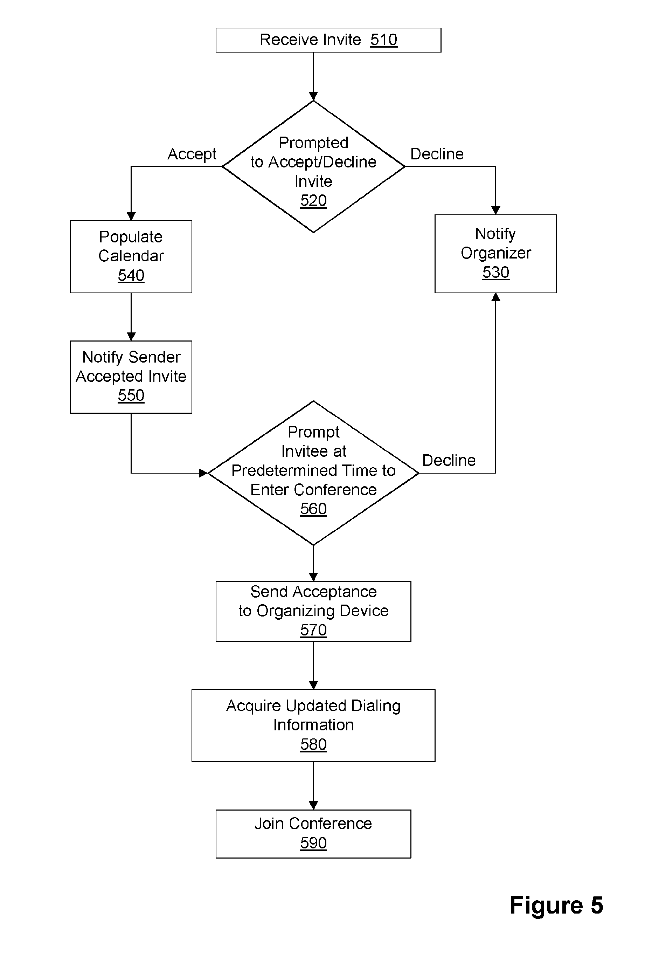

**Figure 5** is a flowchart representing an example method for handling receipt of a conference call invitation. While the flowchart discloses the following steps in a particular order, it is appreciated that at least some of the steps can be moved, modified, or deleted where appropriate. In step 510, an invitee device receives a conference call invitation sent by an organizer of the invitation via an organizer device.

In step 520, the invitee device prompts the user (invitee) of the device to accept or decline the conference call invitation. The prompt can be an audio prompt, or a visual prompt, or both, all of which requesting an input to accept or decline the conference call invitation. If the invitee declines the conference call invitation, the invitee device automatically notifies the organizer device (step 530) that the conference call invitation has been declined. Alternatively, if the invitee accepts the invitation, the invitee device automatically populates (step 540) the invitee's scheduling application with the now scheduled conference. In step 550, the invitee device automatically sends a confirmation to the organizer device that the conference call invitation was accepted.

The invitee device prompts the invitee at a predetermined time to enter the conference at the scheduled conference time (step 560). The prompt can be an audio prompt, or a visual prompt, or both, all of which requesting an input to accept or decline joining the conference at the scheduled time. The predetermined time can be a time determined by the organizer, for example, the invitee device produces a prompt one minute before the conference is scheduled to begin. Additionally, in some embodiments, the predetermined time is set by the scheduling application on the invitee's device.

If the invitee declines to join the conference, the invitee device notifies the organizer device that the invitee has declined to join the conference (step 530). If the invitee decides to join the conference, the invitee device notifies the organizer device that the invitee has agreed to join the conference (step 570). In step 580, the invitee device acquires from the organizing device any updated dialing details associated with the scheduled conference. In some embodiments, the invitee device acquires the updated dialing details from the mail server, or some other server. In some embodiments, step 580 is located between step 550 and 560. Additionally, in some embodiments, step 580 is not performed and the invitee device moves directly from step 570 to step 590.

In step 590 the invitee joins the conference. In some embodiments, the invitee device automatically dials into the conference based on the dialing details of the scheduled conference. In other embodiments, the invitee manually dials into the conference based on the dialing details of the conference.

In some embodiments (not shown) the prompt is simply a reminder of the upcoming conference and does not request any input from the invitee. Accordingly there is no step 570 or 580, and the invitee device moves directly from step 560 to step 590.

Certain adaptations and modifications of the described embodiments can be made. Therefore, the above discussed embodiments are considered to be illustrative and not restrictive.

Embodiments of the present application are not limited to any particular operating system, mobile device architecture, server architecture, or computer programming language.

## Claims

1. A method comprising:
acquiring a message (400) that includes conference call details;
activating a conference call schedule system (200);
generating a conference call invitation;
automatically acquiring conference call dialing details for the conference call invitation from a user profile;
automatically populating, based on the activation, the conference call invitation with the conference call details and the conference call dialing details; and
sending the conference call invitation to one or more invitees, wherein at least one of the invitees are also message addressees.

2. The method of claim 1, further comprising:
receiving a designation of the one or more invitees that are to receive the conference call invite.

3. The method of claim 2, further comprising:
updating the dialing details based on locations of the designated invitees.

4. The method of claim 2, wherein:
the conference call invitation includes an invitee field; and
the invitee field is automatically populated with the email addresses of the designated invitees.

5. The method of claim 1, wherein:
the conference call invitation includes an invitee field; and
the invitee field is automatically populated with the email addresses of all the message addressees.

6. The method of claim 1, wherein:
the message is selected from a group including email message, an instant message, a group discussion, an update thread on Lotus^{™} connections, a group message on Facebook^{™}, and a post on Twitter^{™}.

7. The method of claim 2, further comprising:
acquiring a cancellation from an invitee; and
updating the dialing details based on locations of the remaining designated invitees.

8. A non-transitory computer-readable medium comprising program code, the program code being operable, when executed by a mobile device (130), to cause the mobile device to perform a method, the method comprising:
acquiring a message (400) that includes conference call details;
activating a conference call schedule system (200);
generating a conference call invitation;
automatically acquiring conference call dialing details for the conference call invitation from a user profile;
automatically populating, based on the activation, the conference call invitation with the conference call details and the conference call dialing details; and
sending the conference call invitation to one or more invitees, wherein at least one of the invitees are also message addressees.

9. The computer readable medium of claim 8, further comprising:
acquiring a designation of the one or more invitees that are to receive the conference call invite.

10. The computer readable medium of claim 9, further comprising:
updating the dialing details based on locations of the designated invitees.

11. The computer readable medium of claim 9, wherein:
the conference call invitation includes an invitee field; and
the invitee field is automatically populated with the email addresses of the designated invitees.

12. The computer readable medium of claim 8, wherein:
the conference call invitation includes an invitee field; and
the invitee field is automatically populated with the email addresses of all the message addressees.

13. The computer readable medium of claim 8, wherein:
the message is selected from a group including email message, an instant message, a group discussion, an update thread on Lotus^{™} connections, a group message on Facebook^{™}, and a post on Twitter^{™}.

14. The computer readable medium of claim 8, further comprising:
acquiring a cancellation from an invitee; and
updating the dialing details based on locations of the remaining designated invitees.

15. An apparatus (130) comprising:
a memory; and
one or more processors configured to:
acquire a message (400) that includes conference call details,
activate a conference call schedule system (200),
generate a conference call invitation,
automatically acquire conference call dialing details for the conference call invitation from a user profile,
automatically populate, based on the activation, the conference call invitation with the conference call details and the conference call dialing details, and
send the conference call invitation to one or more invitees, wherein at least one of the invitees are also message addressees.
